(19) Europäisches Patentamt
European Patent Office
Office européen des brevets

(11) **EP 3 969 981 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **20726030.8**

(22) Anmeldetag: **11.05.2020**

(51) Internationale Patentklassifikation (IPC):
***G06F 1/16*** (2006.01)

(52) Gemeinsame Patentklassifikation (CPC):
**G06F 1/1618; G06F 1/162; G06F 1/1679; G06F 1/1681**

(86) Internationale Anmeldenummer:
**PCT/EP2020/063064**

(87) Internationale Veröffentlichungsnummer:
**WO 2020/229418 (19.11.2020 Gazette 2020/47)**

(54) **TRAGBARES COMPUTERGERÄT**

PORTABLE COMPUTER DEVICE

APPAREIL INFORMATIQUE PORTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2019 DE 202019102685 U**

(43) Veröffentlichungstag der Anmeldung:
**23.03.2022 Patentblatt 2022/12**

(73) Patentinhaber: **Hallo Welt Systeme UG (haftungsbeschränkt)**
**42897 Remscheid (DE)**

(72) Erfinder: **WURZER, Jörg**
**42855 Remscheid (DE)**

(74) Vertreter: **Weisbrodt, Bernd**
**Ring & Weisbrodt**
**Patentanwaltsgesellschaft mbH**
**Hohe Straße 33**
**40213 Düsseldorf (DE)**

(56) Entgegenhaltungen:
**US-A1- 2006 039 104     US-A1- 2007 183 123**
**US-B1- 6 262 885     US-B1- 6 532 147**

EP 3 969 981 B1

## Beschreibung

Die vorliegende Erfindung betrifft ein tragbares Computergerät, aufweisend eine obere Geräteeinheit mit einer Anzeigevorrichtung, eine untere Geräteeinheit mit einer Eingabevorrichtung und eine Verbindungsvorrichtung zur Verbindung der oberen Geräteeinheit mit der unteren Geräteeinheit.

Aus dem Stand der Technik sind eine Vielzahl von tragbaren Computergeräten bekannt.

So offenbart die US 6,665,175 B1 einen beweglich an einer Tastatur angebrachten Computermonitor, welcher von der Tastatur wegbewegt und hinsichtlich seiner Ausrichtung in Bezug auf einen Blickwinkel eines Nutzers angepasst werden kann. Nachteilig an dieser Lösung ist, dass Drehknöpfe verwendet werden, um eine Arretierung des Computermonitors an einer bestimmten Position in einer Haltestange zu ermöglichen.

Des Weiteren ist aus der US 6,504,707 B2 ein elektronisches Endgerät bekannt, bei welchem eine Tastatur und ein Bildschirm mittels eines in einem Deckelangeordneten speziellen Rahmens miteinander verbunden sind. Nachteilig bei dieser Lösung ist die Art, auf welche eine Arretierung des Computermonitors vorgenommen wird, da hierzu eine in einem Gehäusedeckel angeordnete Rahmenanordnung zum Einsatz kommt, welche ein hohes Gewicht aufweist und zudem einen hohen konstruktiven Aufwand erfordert.

Die US 2006/0256512 A1 offenbart ferner ein elektronisches Gerät, bei welchem eine Tastatur und ein Bildschirm mittels Armen derart miteinander verbunden sind, dass eine Verschwenkbarkeit des Bildschirms ermöglicht wird. Diese Lösung hat den Nachteil, dass nur eine äußerst begrenzte Verstellbarkeit der Höhe des Bildschirms vorgesehen ist und dass der Bildschirm die Eingabe mittels einer Tastatur in bestimmten Zuständen schwierig gestaltet.

Aus der US 2004/0228077 A1 ist eine Lösung bekannt, bei welcher ein Bildschirm und eine Tastatur mittels Schienen miteinander verbunden werden, ohne dass jedoch eine Verschwenkbarkeit eines Bildschirms ermöglicht wird.

Die US 6,262,885 B1 offenbart ein tragbares Computergerät umfassend eine Verarbeitungseinheit, die mit einer Tastatur, einem Aufzeichnungsmedium und einem Bildschirm gekoppelt ist, wobei die Tastatur und das Aufzeichnungsmedium Teile einer Trägerstruktur des Geräts bilden und im Allgemeinen in verschiedene Richtungen ausgerichtet sind. Dabei ist das Aufzeichnungsmedium dazu eingerichtet, Eingaben von einem Stift zu erhalten, der von einem Benutzer bedient wird. Die Anzeige ist um die Tragstruktur beweglich angeordnet, um sich wahlweise der Verwendung der Anzeige in Verbindung mit der Tastatur oder der Verwendung der Anzeige in Verbindung mit dem Stift und dem Aufzeichnungsmedium anzupassen, wobei ein verlängerbarer Arm dazu dienen kann, die Anzeige mit der Tragstruktur zu verbinden.

Die US 6,532,147 B1 offenbart einen tragbaren Computer mit einem Bildschirm, der mit einem oder mehreren flexiblen Scharnieren, an einem Sockel befestigt ist, um eine Flexibilität der Betriebspositionen des Bildschirms im Verhältnis zum Sockel zu gewährleisten. Der Bildschirm ist dabei drehbar mit den Scharnieren verbunden, so dass der Bildschirm entweder mit dem Gesicht nach oben oder mit dem Gesicht nach unten über dem Sockel oder auf dem Sockel positioniert werden kann.

Die US 2006/0039104 A1 offenbart einen Notebook-Computer mit einem einstellbaren Monitor umfassend einen Host, einen Monitor und ein Verbindungsgerät, das den Host und den Monitor verbindet. Die Funktionen des Verbindungsgeräts ermöglichen eine freie Positionierung des Monitors in Bezug auf den Host, wobei der Monitor dementsprechend in verschiedenen Umgebungen in einem angemessenen Abstand mit einem angenehmen Blickwinkel betrachtet werden kann.

Die US 2007/0183123 A1 offenbart ein tragbares elektronisches Gerät, umfassend einen Sockel, einen Körper und einen Verbindungsmechanismus, wobei der Körper eine erste Oberfläche und eine zweite Oberfläche aufweist, wobei die erste Oberfläche der Basis zugewandt ist. Der Verbindungsmechanismus verbindet die Basis und den Körper drehbar und dreht sich relativ zur Basis in einem bestimmten Winkel, wobei der Körper sich relativ zum Verbindungsmechanismus dreht, so dass die zweite Oberfläche der Basis zugewandt ist.

Um den bestehenden Konflikt zwischen einer geforderten hohen Mobilität sowie einer Leichtigkeit eines Endgerätes auf der einen Seite und einer guten Ergonomie auf der anderen Seite lösen zu können, ist demnach ein Endgerät erforderlich, welches Nutzern eine gesunde Körperhaltung ermöglicht und dabei eine kompakte Bauweise aufweist.

Vor diesem Hintergrund liegt der vorliegenden Erfindung die Aufgabe zugrunde, ein tragbares Endgerät bereitzustellen, welches eine ungesunde, vornübergebeugte Körperhaltung eines Nutzers verhindert, ohne dabei Einbußen in Hinblick auf die Mobilität des Endgerätes hinnehmen zu müssen.

Zur technischen Lösung wird mit der vorliegenden Erfindung ein tragbares Computergerät, aufweisend eine obere Geräteeinheit mit einer Anzeigevorrichtung, eine untere Geräteeinheit mit einer Eingabevorrichtung, und eine Verbindungsvorrichtung zur Verbindung der oberen Geräteeinheit mit der unteren Geräteeinheit vorgeschlagen. Dabei umfasst die Verbindungsvorrichtung ein erstes Verbindungselement, welches mit einem ersten Ende an einer ersten Seite der oberen Geräteeinheit und mit einem zweiten Ende an einer ersten Seite der unteren Geräteeinheit verschwenkbar befestigt ist, wobei jeweils eine Verschwenkbarkeit von bis zu 360 Grad gegeben ist, und ein zweites Verbindungselement, welches mit einem ersten Ende an einer zweiten Seite der oberen Geräteeinheit und mit einem zweiten Ende an einer zweiten Seite der unteren Geräteeinheit verschwenkbar befestigt ist, wobei jeweils eine Verschwenkbarkeit von bis zu 360 Grad gegeben ist, wobei das erste Verbindungselement und das zweite Verbindungselement jeweils derart teleskopartig verstellbar sind, dass die Länge der Verbindungsvorrichtung einstellbar ist.

Die Erfindung macht dabei insbesondere von der Erkenntnis Gebrauch, dass die Anzeigevorrichtung flexibel positionierbar ist. So ist es nicht mehr erforderlich, dass die Hände zwar ergonomisch auf der Tastatur liegen, während die Arme in einem 90°-Winkel angewinkelt sind, dafür aber die Augen relativ weit von der Anzeigevorrichtung entfernt sind, so dass diese Details nur schwer oder nicht erfassen können. Stattdessen erlaubt die erfindungsgemäße Lösung die Nutzung eines Laptops in einem Tablet-Modus, ohne dass die Tastatur wie bei einem konventionellen 360°-Gelenk die Bedienung stört oder beschädigt werden kann.

Die Vorteile der erfindungsgemäßen Bauweise des Endgerätes bestehen in den folgenden Punkten:

1. Die optimierte Ergonomie erlaubt eine gerade Sitzhaltung mit im rechten Winkel angeordneten Armen, wobei die Händen auf der Tastatur aufliegen, und gleichzeitig eine kürzere Distanz der Anzeigeflächen zum Nutzer für eine ausreichende Nähe zu den Augen.

2. Eine leichte Bauweise dient einer hohen Mobilität.

3. Vielfache Anwendungsfelder für produktives Schreiben (im Laptop-Modus), bequemes interaktives Konsumieren (im Tablet-Modus), Zeichnen und Konstruieren oder das Bedienen von Spezialsoftware wie beispielsweise Videoschnitt (mittels einer virtuellen Tastatur), Lesen bei Sonnenlicht (E-Reader Modus der virtuellen Tastatur) oder eine vergrößerte Anzeige für Präsentationen (Poster Modus).

Das erfindungsgemäße tragbare Computergerät löst einen Konflikt zwischen hoher Mobilität und Leichtigkeit auf der einen und der Ergonomie auf der anderen Seite auf. Herkömmliche Laptops verbinden Tastatur und optische Ausgabe, so dass Benutzer zu einer ungesunden, vornübergebeugten Körperhaltung neigen, insbesondere weil die Hände zwar ergonomisch auf der Tastatur liegen, während die Arme etwa 90 Grad angewinkelt sind, dafür aber die Augen relativ weit entfernt sind, so dass die Augen Details nur schwer oder nicht erfassen können. Die erfindungsgemäße Lösung sieht eine flexible Positionierung der optischen Anzeige vor und erlaubt zudem insbesondere die Nutzung eines Laptops als sogenanntes Tablet, ohne, dass die Tastatur wie ansonsten bei einem 360-Grad-Gelenk gegeben die Bedienung stört oder beschädigt werden kann.

Um unterschiedliche Anwendungsfälle abdecken zu können, kommen bisher in der Regel mehrere verschiedene Endgeräte zum Einsatz. Neben einem Laptop ist dies vor allem ein sogenanntes Smartphone. Dies macht eine regelmäßige Synchronisation der Endgeräte erforderlich, beispielsweise durch sogenannte Cloud-Dienste. An Stelle eigenständiger Module der Datenverarbeitung (CPU, GPU), der Datenkommunikation und des Datenspeichers kann für ergonomische und produktive Tätigkeiten ein Endgerät auf wenige Module der Dateneingabe und Datenausgabe sowie unterstützende Datenverarbeitung und Datenspeicherung reduziert werden, indem das Endgerät mit einem Smartphone gekoppelt wird.

Mit dem erfindungsgemäßen tragbaren Computergerät wird insofern ein mobiles Endgerät als ergonomische Mensch-Maschine-Schnittstelle eines Systems zur Datenverarbeitung und -kommunikation mit folgenden Eigenschaften bereitgestellt:

- Untere Geräteeinheit als primäre Eingabeeinheit mit

  ◦ virtueller oder physikalischer Tastatur,

  ◦ kombinierter oder separater Fläche für eine Gestensteuerung,

  ◦ Batterieeinheit zur Stromversorgung des selben Geräts und verbundener Geräte oder verbundenem Zubehör,

  ◦ Schnittstellen zur Datenkommunikation und Stromversorgung,

  ◦ optionaler Mono- oder Stereo-Tonausgabe,

  ◦ optionaler Mono- oder Stereo-Toneingabe,

  ◦ optionaler Datenverarbeitungskomponente (CPU, GPU),

  ◦ optionaler Datenkommunikationskomponente,

○ optionaler Datenspeicherkomponente, und

○ optionaler rückseitige Kamera auf der Unterseite,

• obere Geräteeinheit als primäre Ausgabeeinheit mit

○ optischer Anzeigevorrichtung, und

○ optionaler Kamera,

• teleskopierbare Verbindungsvorrichtung, insbesondere Teleskopschiene mit beweglicher, um 360° beweglicher Befestigung an den beiden Geräteeinheiten und -seiten

○ mit Stromversorgung und Datenkommunikation zwischen den beiden Geräteeinheiten,

• optionale magnetische Anziehung der oberen und unteren Geräteeinheit

○ am rückseitigen Rand zur einfacheren Fixierung und Stabilität im einfach geöffneten Zustand, und

○ am vorderseitigen Rand zum einfacheren Schließen und zur Erhöhung der Stabilität im geschlossenen Zustand.

In einer vorteilhaften Ausgestaltung ist vorgesehen, dass das erste Verbindungselement der Verbindungsvorrichtung und das zweite Verbindungselement der Verbindungsvorrichtung jeweils als Teleskopschiene ausgebildet sind. Teleskopschienen ermöglichen eine einfache Verstellbarkeit in der Länge und weisen dabei ein geringes Eigengewicht auf. Zudem sind Teleskopschienen auf einfache Art und Weise an der oberen Geräteeinheit und der unteren Geräteeinheit montierbar.

Gemäß einer weiteren vorteilhaften Ausgestaltung ist vorgesehen, dass die Teleskopschiene ein Feststellmittel zur Fixierung einer manuell eingestellten Position aufweist. Durch ein solches Feststellmittel wird erreicht, dass sich eine eingestellte Position auch nicht durch Erschütterungen verstellt, welche beispielsweise im mobilen Einsatz, insbesondere während Bahn- oder Zugreisen, auftreten können.

Gemäß einer weiteren vorteilhaften Ausgestaltung ist vorgesehen, dass die Teleskopschiene ein Schwerläufigkeitsmittel umfasst, durch welches die Teleskopschiene automatisch bis zu einer definierbaren einwirkenden Kraft in einer manuell eingestellten Position verbleibt. Dies hat den Vorteil, dass auch ohne Bereitstellen zusätzlicher Feststellmittel eine bestimmte Position der jeweiligen Teleskopschiene sicher gehalten werden kann.

Gemäß einer weiteren vorteilhaften Ausgestaltung ist vorgesehen, dass das Schwerläufigkeitsmittel ein Gummiprofil und/oder eine hydraulische Einrichtung umfasst.

Gemäß einer weiteren vorteilhaften Ausgestaltung ist vorgesehen, dass die obere Geräteeinheit eine zumindest abschnittsweise entlang der ersten Seite der oberen Geräteeinheit und entlang der zweiten Seite der oberen Geräteeinheit angeordnete bzw. ausgebildete erste Anziehungsvorrichtung aufweist, und die untere Geräteeinheit eine zumindest abschnittsweise entlang der ersten Seite der unteren Geräteeinheit und entlang der zweiten Seite der unteren Geräteeinheit angeordnete bzw. ausgebildete zweite Anziehungsvorrichtung aufweist, wobei die erste Anziehungsvorrichtung mit der zweiten Anziehungsvorrichtung zusammenwirkt. Dadurch wird ein sicheres Zusammenhalten der oberen Geräteeinheit mit der unteren Geräteeinheit erzielt, was insbesondere in einem ungenutzten, zusammengeklappten Zustand des Computergeräts oder bei Verwendung des Computergeräts in einem Tablet-Modus vorteilhaft ist.

Gemäß einer weiteren vorteilhaften Ausgestaltung ist vorgesehen, dass ein Zusammenwirken der ersten Anziehungsvorrichtung mit der zweiten Anziehungsvorrichtung mittels magnetischer Kraft vorgesehen ist.

Gemäß einer weiteren vorteilhaften Ausgestaltung ist vorgesehen, dass zur Verbindung des jeweiligen Endes des jeweiligen Verbindungselements mit der oberen Geräteeinheit bzw. mit der unteren Geräteeinheit ein Zylinderscharnier vorgesehen ist. Ein Zylinderscharnier ermöglicht auf einfache Art und Weise, ein Ende eines Verbindungselements mit der oberen Geräteeinheit bzw. der unteren Geräteeinheit zu verbinden.

Gemäß einer weiteren vorteilhaften Ausgestaltung ist vorgesehen, dass die Anzeigevorrichtung berührungsempfindlich ausgebildet ist und zusätzlich zur Eingabe von Informationen vorgesehen ist. Durch eine derartige Anzeige kann das tragbare Computergerät in einem Tablet-Modus verwendet werden, in welchem die obere Geräteeinheit in Vergleich zu einem geschlossenen Zustand um 180 Grad gedreht ist.

Gemäß einer weiteren vorteilhaften Ausgestaltung ist vorgesehen, dass die Eingabevorrichtung der unteren Geräteeinheit zumindest eine berührungsempfindliche Fläche umfasst. Im Gegensatz zu einer Erhebungen aufweisenden Eingabevorrichtung, beispielsweise einer konventionellen Tastatur, stört eine derartige Lösung nicht in einem Tablet-Modus. Vorzugsweise kann die berührungsempfindliche Fläche inaktiv geschaltet werden.

Gemäß einer weiteren vorteilhaften Ausgestaltung ist vorgesehen, dass die zumindest eine berührungsempfindliche Fläche der Eingabevorrichtung der unteren Geräteeinheit einen Sensor zur Gestensteuerung des Computergerätes umfasst.

Gemäß einer weiteren vorteilhaften Ausgestaltung ist vorgesehen, dass die zumindest eine berührungsempfindliche Fläche der Eingabevorrichtung der unteren Geräteeinheit eine virtuelle Tastatur umfasst. Auf diese Weise kann das Endgerät unterschiedliche Tastaturen für unterschiedliche Sprachen bereitstellen. Hierbei kann die virtuelle Tastatur einen Tastendruck beispielsweise durch Vibration und/oder ein akustisches Signal bestätigen. Alternativ können auch anderer Eingabeoptionen angezeigt werden, zum Beispiel speziell für Videoschnitt, Fotobearbeitung und/oder Musikproduktion oder -instrumente.

Gemäß einer weiteren vorteilhaften Ausgestaltung ist vorgesehen, dass die virtuelle Tastatur eine Rücklicht-Tastatur ist. Dadurch ist eine Nutzung bei beeinträchtigten Lichtverhältnissen vereinfacht. Vorzugsweise kann eine Beleuchtung einzelner Elemente der virtuellen Tastatur in Abhängigkeit von auf der Anzeigevorrichtung dargestellten Elementen erfolgen.

Gemäß einer weiteren vorteilhaften Ausgestaltung ist vorgesehen, dass die virtuelle Tastatur eine E-Ink-Tastatur ist. Eine derartige Tastatur ist äußerst sparsam im Energieverbrauch und ermöglicht eine blickwinkelunabhängige Betrachtungsweise, selbst bei schlechten Beleuchtungsverhältnissen.

Gemäß einer weiteren vorteilhaften Ausgestaltung ist vorgesehen, dass die als E-Ink-Tastatur ausgebildete Eingabevorrichtung zusätzlich zur Ausgabe von Informationen vorgesehen ist. Auf diese Weise kann die insgesamt verfügbare Fläche zur Ausgabe vergrößert werden, da neben der Ausgabevorrichtung auch die Eingabevorrichtung dazu genutzt wird.

Vorteilhafterweise umfasst die untere Geräteeinheit als primäre Eingabeeinheit eine virtuelle oder physikalische Tastatur, eine kombinierte oder separate Fläche für Gestensteuerung, eine Batterieeinheit zur Stromversorgung des Computergeräts sowie verbundener Geräte oder von verbundenem Zubehör, eine Schnittstelle zur Datenkommunikation und Stromversorgung, ein Mittel zur optionalen Mono- oder Stereo-Tonausgabe, ein Mittel zur optionalen Mono- oder Stereo-Toneingabe, eine optionale Datenverarbeitungskomponente wie CPU (CPU: Central Processing Unit) und/oder GPU (GPU: Graphics Processing Unit), eine optional Datenkommunikationskomponente, eine optionale Datenspeicherkomponente und/oder eine rückseitige Kamera.

Vorteilhafterweise umfasst die obere Geräteeinheit eine Kamera.

Prinzipiell kann das tragbare Computergerät mit oder ohne eigene Rechnereinheit gebaut oder als solche verwendet werden (Accessory Mode). In diesem Fall dient ein weiteres Endgerät, zum Beispiel ein Smartphone oder eine Smart Watch als zentrale Rechnereinheit, die über Kabel oder Funk, beispielsweise Miracast mit dem Gerät verbunden ist. Eine weitere Variante ist eine Recheneinheit zur Unterstützung der Daten-, Ton- und Bildbearbeitung mit einer oder mehreren CPUs und/oder GPUs (Hybrid Mode).

Der Vorteil einer Verwendung als reine Ein- und Ausgabeeinheit ist die fehlende Notwendigkeit der Synchronisation von Daten beim Wechsel des Verwendungskontextes. Hierdurch wird die Komplexität des Gesamtsystems von Betriebssystem, Programmen und Diensten erheblich reduziert, die heute externe Cloud Services, Synchronisationsläufe und Ereignisbehandlung (Event Handling) benötigen.

Den Bedarf an den Kernfunktionen von daten- und informationsverarbeitenden Systemen, die Eingabe, die Bearbeitung, der Abruf, die Ausgabe und das Teilen bzw. Verteilen von Informationen repräsentierenden Daten, bedienen nach dem aktuellen Stand der Technik nicht nur eine Vielzahl von technischen Strukturen eines einzigen datenverarbeitenden Systems, sondern eine Vielzahl von datenverarbeitenden Systemen. Die Zahl hat auch hier zugenommen. Neben stationären Systemen (insbesondere sogenannte Desktop Computer) sind mobile Systeme in unterschiedlichen Größen von beweglich (insbesondere sogenannte Laptops) über leichtgewichtig (insbesondere sogenannte Tablets) bis zu handlich (insbesondere sogenannte Smart Phones) und sogar tragbaren Geräten (insbesondere sogenannte Wearables) in Verwendung, die häufig ebenso unabhängig und unverbunden arbeiten. Über ein Netzwerk verfügbare Dienste, insbesondere sogenannte Cloud-Services, sollen diese Lücke schließen, reduzieren dabei aber nicht die Vielfalt der Endgeräte und erhöhen sogar die Vielfalt für die Eingabe, die Bearbeitung und/oder den Abruf Informationen repräsentierender Daten.

Die im Stand der Technik bekannten daten- und informationsverarbeitenden Systeme erlauben zwar immer leichtere, kleinere und zugleich leistungsfähigere Endgeräte, führen aber auch zu einem zunehmenden ergonomischen Paradox. Schon ein beweglicher Computer (insbesondere ein sogenanntes Laptop) mit über ein Gelenk verbundener Tastatur und Anzeige führt zu der Unvereinbarkeit einer korrekten Körperhaltung seitens des Anwenders. Handliche Endgeräte (insbesondere sogenannte Smart Phones) sind hingegen kaum geeignet, um lange Texte anzuzeigen und erst recht nicht, um solche einzugeben. Auch hier ist eine Unvereinbarkeit mit einer gesunden, korrekten Körperhaltung seitens des Anwenders bei dauerhafter Verwendung erkennbar und gegeben. Tragbare Endgeräte (insbesondere sogenannte Wearables) wie Uhren (insbesondere sogenannte Smart Watches) bieten schließlich kaum noch eine Möglichkeit, Informationen repräsentierende Daten anzuzeigen oder diese gar einzugeben. Viele Systemhersteller setzen deshalb auf die natürliche Sprachinteraktion mit datenverarbeitenden Systemen und übersehen hierbei die Bedeutung geschriebener Sprache und die Möglichkeit der Bearbeitung und Darstellung Informationen repräsentierender Daten, die sich nicht über eine Sprachausgabe vermitteln lassen. Diese Systeme tragen wiederum zur Vielfalt bei, an Stelle ein integrales Konzept zu liefern, um die Vielfalt und Komplexität zu Gunsten des eigentlichen Bedarfs der Anwender zu reduzieren.

Das hier beschriebene Endgerät löst einen Konflikt zwischen hoher Mobilität und Leichtigkeit auf der einen und der Ergonomie auf der anderen Seite auf. Herkömmliche Laptops verbinden Tastatur und optische Ausgabe, so dass Benutzer zu einer ungesunden, vornübergebeugten Körperhaltung neigen, weil die Hände zwar ergonomisch auf der Tastatur liegen, während der Arm 90 Grad angewinkelt ist, dafür aber die Augen relativ weit entfernt sind, so dass sie Details nur schwer oder nicht erfassen können. Eine Lösung ist die flexible Positionierung der optischen Anzeige. Sie erlaubt zudem die Nutzung eines Laptops als Tablet, ohne, dass die Tastatur wie bei einem 360°-Gelenk die Bedienung stört oder beschädigt werden kann.

Um unterschiedliche Anwendungsfälle abzusenken, kommen heute in der Regel mehrere verschiedene Endgeräte zum Einsatz, neben einem Laptop ist das vor allem ein Smartphone. Das erfordert eine regelmäßige Synchronisation, beispielsweise durch Cloud Dienste. An Stelle eigenständiger Module der Datenverarbeitung (CPU, GPU), der Datenkommunikation und des Datenspeichers kann für ergonomische und produktive Tätigkeiten ein Endgerät auf wenige Module der Dateien- und Ausgabe sowie unterstützende Datenverarbeitung und -speicherung reduziert werden, indem das Endgerät mit einem Smartphone gekoppelt wird.

In Kombination mit einem mobilen Endgerät entsteht ein Verbund von Endgeräten. Dieses System ist durch folgende Eigenschaften gekennzeichnet:

- System mit mehreren, vorzugsweise verteilten Endgeräten, die jeweils mindestens eine der folgenden Eigenschaften besitzen und in ihrer Kombination zumindest die ersten vier Eigenschaften abdecken:

    ◦ Eine oder mehrere, vorzugsweise (verteilte) Recheneinheiten (CPU, GPU),

    ◦ eine oder mehrere, vorzugsweise verteilte Speichereinheiten,

    ◦ mindestens eine Eingabeeinheit

        ▪ mit physikalischen oder virtuellen Tasten und/oder Gestensteuerung und/oder Ton- oder Spracheingabe,

    ◦ mindestens einer AV Ausgabeeinheit,

    ◦ optionalen Anschlüssen (USB-C, microSD)

    ◦ optionales Funkmodul zur Kommunikation über die Systemgrenzen hinaus in WAN, LAN oder Mobilfunknetzen

- Die Endgeräte besitzen jeweils ein Funkmodul für die Kommunikation mit anderen Endgeräten des Systems in einem lokalen Netz für die

    ◦ Verteilung von Rechenleistung
    o Verteilung von Speicher

        ▪ für die Berechnung oder Speicherung einschließlich Archivierung und Kopien (Auto-Backup) von Daten.

Das System verwendet ein hochmobiles Endgerät als persönliche, zentrale Recheneinheit und Datenspeicher des Anwenders. Die Ausgestaltung kann beispielsweise als Uhr, Gürtelschnalle oder Smartphone erfolgen. Diese zentrale Recheneinheit mit Datenspeicher kommuniziert mit einer audiovisuellen Ein- und Ausgabeeinheit, sowie weiteren Endgeräten zur Dateneingabe und Steuerung sowie der erweiterten Rechen- und Datenkapazitäten.

Gegeben sein das oben beschriebene System das sich durch folgende Eigenschaften auszeichnet:

    1. Ein hochmobiles Endgerät mit

        ◦ Recheneinheit

        ◦ Datenspeichereinheit

        ◦ Funkmodul zur Übertragung

- von AV Signalen von und an weitere Endgeräte,

- von Steuersignalen von und an weitere Endgeräte,

- von weiteren Daten an und von weiteren Endgeräten,

- von Rechenoperationen von und an weitere Endgeräte,

○ Eingabeeinheit mit

- berührungsempfindlicher Fläche (TouchPad),

- berührungsempfindlichen Seitenrändern (TouchBars),

- optionaler visueller Anzeige;

2. ein mobiles Endgerät mit

○ mindestens einer AV Ein- und Ausgabeeinheit mit

- visueller Anzeige

- Audio-Ausgabe,

- optionaler Videoeingabe über Kamera,

- optionaler Audio-Eingabe über mindestens ein Mikrophon,

○ einem Funkmodul zur Übertragung

- von Daten von und an das zentrale Endgerät,

- von Steuersignalen von und an das zentrale Endgerät,

○ einer vorzugsweise optionalen Recheneinheit zur Aufbereitung der Signale;

3. ein vorzugsweise optionales weiteres oder kombiniertes mobiles Endgerät mit

○ einer physikalischen oder vorzugsweise virtuellen Tastatur,

○ einer berührungsempfindlichen Fläche (TouchPad),

○ einem Funkmodul zur Übertragung

- von Daten von und an das zentrale Endgerät,

- von Steuersignalen von und an das zentrale Endgerät,

- optional von AV Signalen von und an weitere Endgeräte,

- optional von Daten an und von weiteren Endgeräten,

- optional von Rechenoperationen von und an weitere Endgeräte,

○ einer vorzugsweise optionalen Recheneinheit

- zur Übernahme von Rechenoperationen des zentralen Endgeräts,

7

- ◦ einer vorzugsweise optionalen Konnektivität

  - ▪ zu weiteren Endgeräten (USB-C),

  - ▪ zu Speichereinheiten (SD),

4. ein vorzugsweise optionales weiteres, vorzugsweise stationäres Endgerät mit

- ◦ einer Recheneinheit

  - ▪ für die Bereitstellung von Diensten,

  - ▪ optional für die Übernahme von teuren Rechenoperationen,

- ◦ einem Funkmodul

  - ▪ zur Übertragung von Steuersignalen von weiteren Endgeräten,

  - ▪ zur Übertragung von Daten an und von weiteren Endgeräten,

  - ▪ für Datenkommunikation mit einem WAN und/oder LAN,

  - ▪ optional zur Übertragung von AV Signalen von und an weitere Endgeräte,

  - ▪ optional zur Übertragung von Rechenoperationen von und an weitere Endgeräte,

- ◦ einer Speichereinheit

  - ▪ für die Auslagerung von Daten des zentralen Endgeräts,

  - ▪ für die Sicherung (Backup) von Daten des zentralen Endgeräts,

5. ein vorzugsweise optionales weiteres, vorzugsweise stationäres Endgerät mit

- ◦ mindestens einer AV Ausgabeeinheit

  - ▪ zur großflächigen, transparenten Bild- und Video-Anzeige,

  - ▪ zur Wiedergabe von Audio-Signalen,

- ◦ einer vorzugsweise optionalen AV Eingabeeinheit,

- ◦ einer vorzugsweise optionalen Recheneinheit

  - ▪ für die Aufbereitung von AV Signalen,

  - ▪ für die Übernahme teurer bzw. kostenintensiver Rechenoperationen,

- ◦ einem Funkmodul für die Übertragung

  - ▪ mindestens von AV Signalen von weiteren Endgeräten,

  - ▪ optional von AV Signalen an weitere Endgeräte,

  - ▪ optional von Steuersignalen von und an weitere, Endgeräte,

  - ▪ optional von Daten an und von weiteren Endgeräten,

▪ optional von Rechenoperationen von und an weitere Endgeräte.

Das System besteht beispielhaft aus einer Kombination folgender Endgeräte:

- einer Smartwatch oder ein Smartphone als zentrale Recheneinheit und Datenspeicher,

- ein Gerät für die Ein- und Ausgabe von AV-Signalen, insbesondere als virtuelle oder physikalische Tastatur,

- einer Speicher- und Kommunikationseinheit (AirBase) im Sinne einer privaten Cloud und

- einer optionalen großflächigen transparenten Anzeige (AirPanel) als Ersatz für heutige Bildschirme.

Neben der Kommunikation zum Austausch von Steuersignalen und AV Signalen ist der Verbund von Endgeräten als ein Gesamtsystem in der Lage, Daten und auch Rechenoperationen auszutauschen.

Gegeben sein das oben beschriebene System das sich durch folgende Eigenschaften auszeichnet:

- Die zentrale Einheit lagert Daten auf ein anderes Endgerät im Verbund aus, die nicht häufig verwendet werden und/oder ein altes Erstellung- oder Änderungsdatum besitzen,

  ◦ wobei das System darauf achtet leeren Speicher in einem Umfang relativ zum Gesamtspeicher vorzuhalten,

  ◦ wobei das System die Information über die Existenz der Datenobjekte vorzugsweise über eine Indexstruktur vorhält,

  ◦ wobei das System die Entscheidung, welche Datenobjekte ausgelagert werden, nach einer Rangfolge (Ranking) und/oder der letzten zeitlichen Nutzung oder Änderung der Datenobjekte trifft.

Eine Formel für das Ranking kann die Parameter Änderungszeitpunkt, Verwendungshäufigkeit und Letzte Nutzung einzeln oder kombiniert verwenden:

$$\text{float score = sum ( 1 / e\^(now - timeStampOfUse * factor) )}$$

Ausgehend von der hochmobilen zentralen Einheit, kann der Verbund von Endgeräten Rechenoperationen teilen.

Gegeben sein das oben genannte Datenverarbeitungssystem mit folgenden Eigenschaften:

- Eins der Endgeräte des Verbunds kann eine führende, koordinierende Rolle für Rechenoperationen übernehmen, vorzugsweise die hochmobile zentrale Einheit mit zentralen Datenspeicher,

- wobei teure Rechenoperationen auf ein anderes Endgerät ausgelagert werden können,

- wobei Rechenoperationen direkt auf eine andere Rechnereinheit (Prozessor) übertragen oder auf einen Dienst delegiert werden können,

- wobei das Kriterium das der Auslagerung, Rendering von Bildern und/oder Videos, das Kodieren oder Dekodieren von Dateien, und/oder das Verteilen von Prozessen (Threads) eines Programms oder des Betriebssystems selbst sein kann.

Weitere Einzelheiten, Merkmale und Vorteile der Erfindung werden nachfolgend anhand der in den Figuren der Zeichnungen dargestellten Ausführungsbeispiele näher erläutert. Dabei zeigen:

Fig. 1   in einer perspektivischen Ansicht ein erfindungsgemäßes Computergerät in einem ungenutzten Zustand;

Fig. 2   in einer perspektivischen Ansicht ein erfindungsgemäßes Computergerät in einem aufgeklappten Zustand gemäß Laptop-Modus;

Fig. 3   in einer perspektivischen Ansicht ein erfindungsgemäßes Computergerät in einem aufgeklappten Zustand gemäß Laptop-Modus mit einer zum Nutzer geschwenkten Anzeigevorrichtung;

Fig. 4   in einer perspektivischen Ansicht ein erfindungsgemäßes Computergerät in einem aufgeklappten Zustand

Fig. 5      in einer Draufsicht eine Ausgestaltungsvariante für eine erfindungsgemäße virtuelle Tastatur;
Fig. 6      in einer perspektivischen Ansicht ein erfindungsgemäßes Computergerät im Poster-Modus;
Fig. 7      in einer perspektivischen Ansicht ein erfindungsgemäßes Computergerät im Tablet-Modus;
Fig. 8a     in einer perspektivischen Ansicht ein Zylinderscharnier gemäß einer ersten Ausgestaltungsform;
Fig. 8b     in einer Draufsicht das Zylinderscharnier gemäß Fig. 8a;
Fig. 9      in einer perspektivischen Ansicht ein Zylinderscharnier gemäß einer zweiten Ausgestaltungsform;

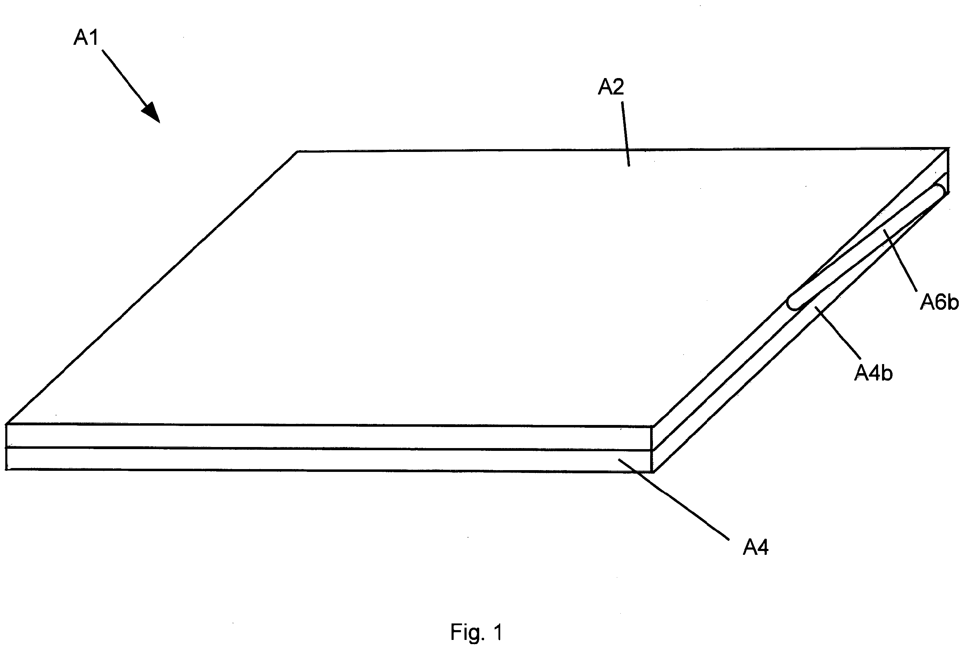

Fig. 1 zeigt in einer perspektivischen Ansicht ein erfindungsgemäßes Computergerät A1 in einem ungenutzten Zustand. Das Computergerät A1 umfasst eine obere Geräteeinheit A2 mit einer Anzeigevorrichtung A3 und eine untere Geräteeinheit A4 mit einer Eingabevorrichtung A5. Vorliegend sind die obere Geräteeinheit A2 und die untere Geräteeinheit A4 mittels einer Verbindungsvorrichtung miteinander verbunden. Die als Verbindungsvorrichtung agierende sichtbare Teleskopschiene zur Verbindung der oberen und unteren Geräteseite ist leicht angewinkelt.

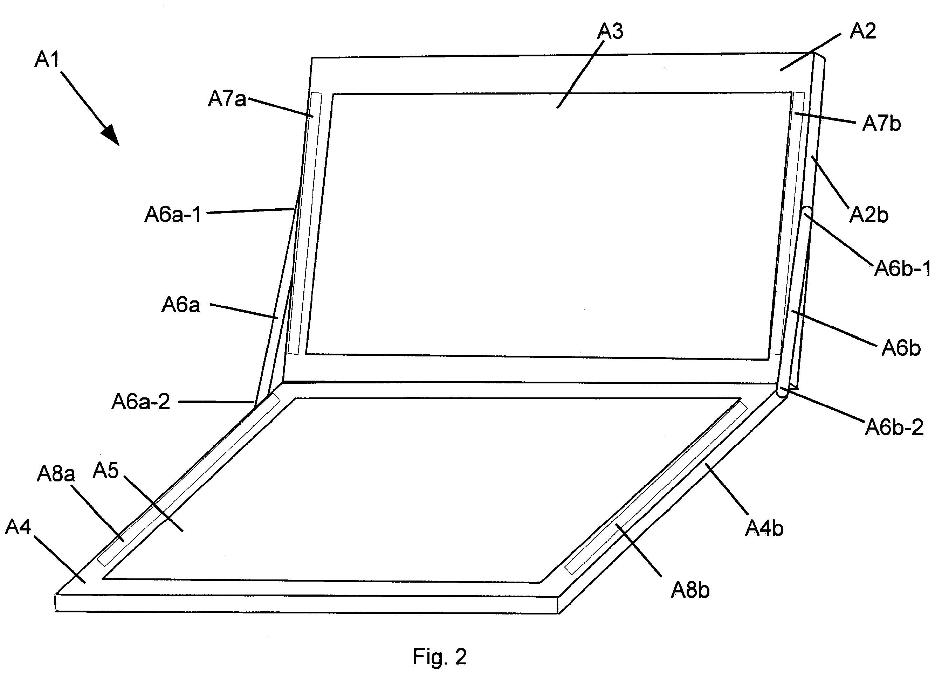

Fig. 2 zeigt in einer perspektivischen Ansicht ein erfindungsgemäßes Computergerät in einem aufgeklappten Zustand gemäß einem Laptop-Modus. Zu erkennen ist die Anzeigevorrichtung A3 auf der Innenseite der oberen Geräteeinheit A2 und eine als Eingabevorrichtung A5 fungierende Fläche, welche flexibel für eine Kombination von virtueller Tastatur und Gestensteuerung oder für die Erstellung und Bearbeitung von Grafiken mit einem Stylus Pen genutzt werden kann.

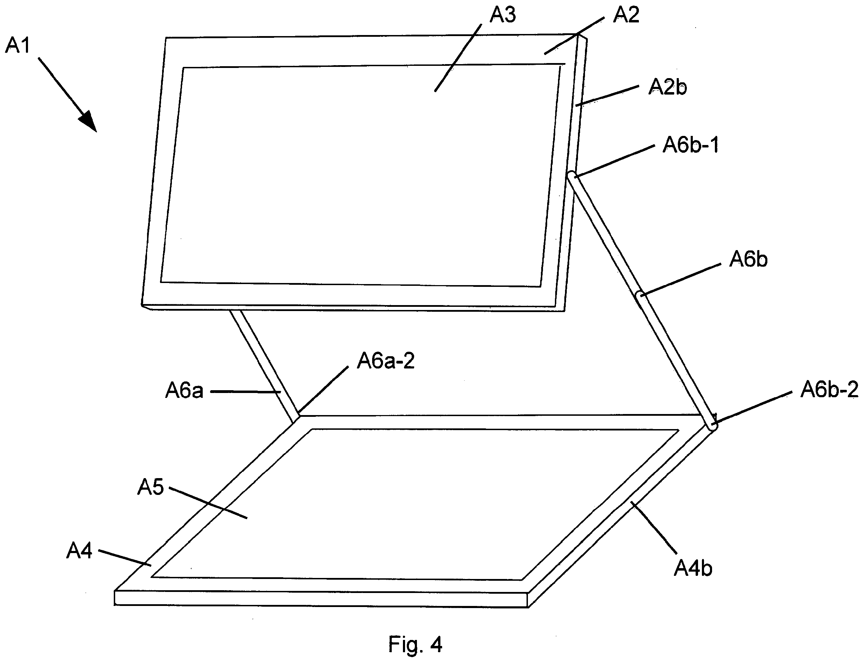

Es ist ferner erkennbar, dass die Verbindungsvorrichtung ein erstes Verbindungselement A6a umfasst, welches mit einem ersten Ende A6a-1 an einer ersten Seite A2a der oberen Geräteeinheit A2 und mit einem zweiten Ende A6a-2 an einer ersten Seite A4a der unteren Geräteeinheit A4 verschwenkbar befestigt ist, wobei jeweils eine Verschwenkbarkeit von bis zu 360 Grad gegeben ist. Ferner umfasst die Verbindungsvorrichtung ein zweites Verbindungselement A6b, welches mit einem ersten Ende A6b-1 an einer zweiten Seite A2b der oberen Geräteeinheit A2 und mit einem zweiten Ende A6b-2 an einer zweiten Seite A4b der unteren Geräteeinheit A4 verschwenkbar befestigt ist, wobei ebenfalls jeweils eine Verschwenkbarkeit von bis zu 360 Grad gegeben ist. Das das erste Verbindungselement A6a und das zweite Verbindungselement A6b sind jeweils derart teleskopartig verstellbar, dass die Länge der Verbindungsvorrichtung einstellbar ist wie der nachfolgend beschriebenen Fig. 4 zu entnehmen ist.

Gemäß dem Ausführungsbeispiel in Fig. 2 weist die obere Geräteeinheit A2 neben einer Kamera A10 zusätzlich eine abschnittsweise entlang der ersten Seite A2a der oberen Geräteeinheit A2 und entlang der zweiten Seite A2b der oberen Geräteeinheit A2 angeordnete erste Anziehungsvorrichtung A7a, A7b und die untere Geräteeinheit A4 eine abschnittsweise entlang der ersten Seite A4a der unteren Geräteeinheit A4 und entlang der zweiten Seite A4b der unteren Geräteeinheit A4 angeordnete bzw. ausgebildete zweite Anziehungsvorrichtung A8a, A8b auf. Dabei wirkt die erste Anziehungsvorrichtung A7a, A7b mit der zweiten Anziehungsvorrichtung A8a, A8b mittels magnetischer Kraft zusammen. Alternativ und/oder zusätzlich kann vorgesehen sein, dass eine Anziehungsvorrichtung auf der Oberseite der oberen Geräteeinheit A2 angeordnet ist, ebenfalls entlang der ersten Seite A2a der oberen Geräteeinheit A2 und entlang der zweiten Seite A2b der oberen Geräteeinheit A2, so dass die obere Geräteeinheit in einem nachfolgend beschriebenen Tablet-Modus an der unteren Geräteeinheit A4 gehalten wird.

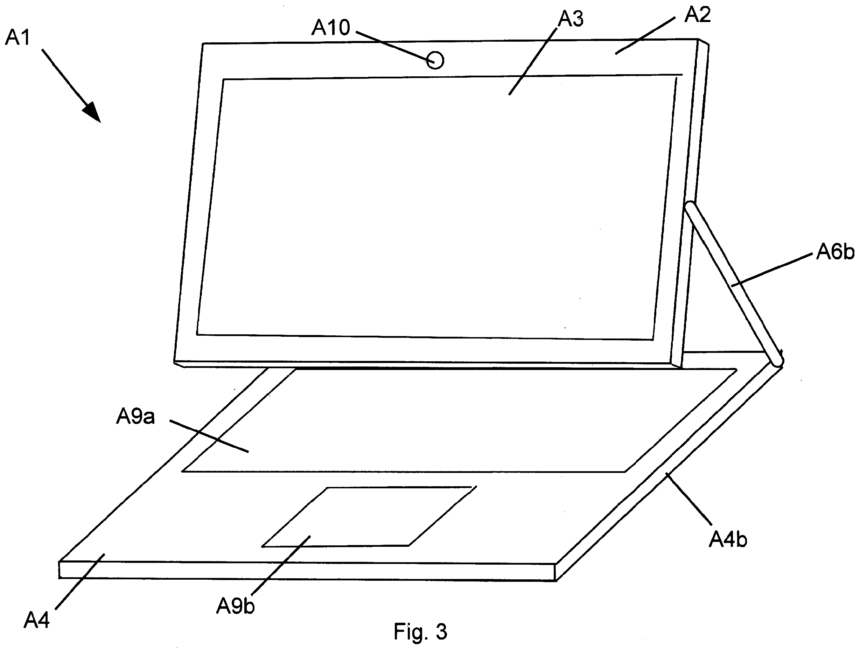

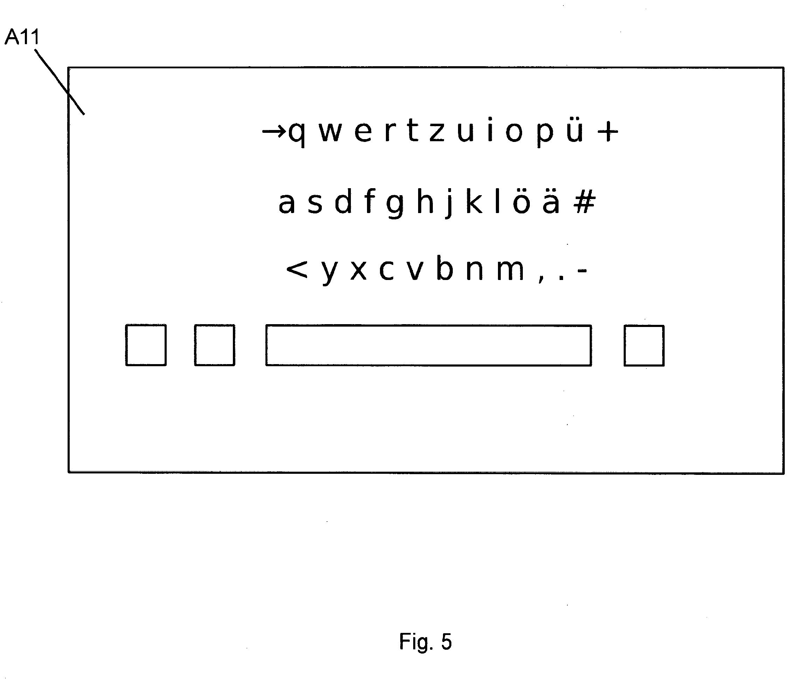

Fig. 3 zeigt in einer perspektivischen Ansicht ein erfindungsgemäßes Computergerät in einem aufgeklappten Zustand gemäß Laptop-Modus mit einer zum Nutzer geschwenkten Anzeigevorrichtung. Vorliegend umfasst die Eingabevorrichtung A5 der unteren Geräteeinheit A4 zwei berührungsempfindliche Flächen A9a, A9b, von denen eine berührungsempfindliche Fläche A9a einen Sensor zur Gestensteuerung des Computergerätes A1 umfasst. Die andere berührungsempfindliche Fläche A9b hingegen ist als virtuelle Tastatur A11 ausgebildet, welche mit Bezug zu Fig. 5 beschrieben wird.

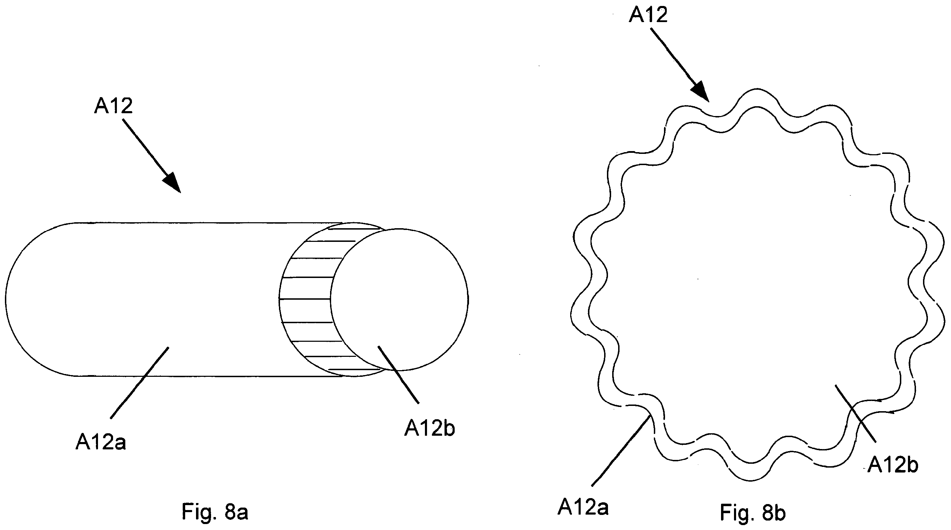

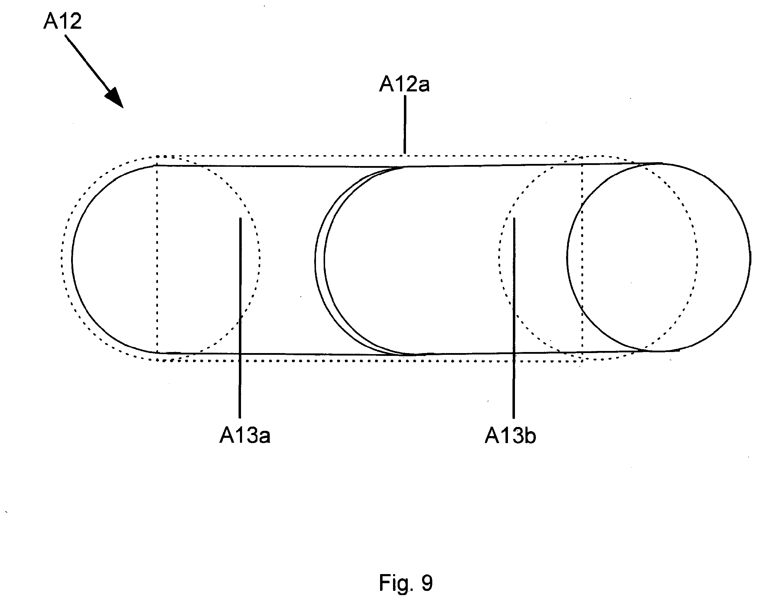

Gemäß einer einfachen Variante der vorliegenden Erfindung kann ein Scharnier mit einer Schraube und einem von Hand zu betätigendem Kopf vorgesehen sein, um eine Arretierung durch Befestigen bzw. Lösen der Schraube durch den Knopf vorzunehmen. Vorteilhafter sind jedoch Zylinderscharniere zur Verstärkung der Winkelposition der Teleskopschienen wie sie mit Bezug auf Fig. 8a, Fig. 8b und Fig. 9 beschrieben sind.

Fig. 4 in einer perspektivischen Ansicht ein erfindungsgemäßes Computergerät in einem aufgeklappten Zustand gemäß Laptop-Modus mit zusätzlich ausgezogenen Verbindungselementen. Vorliegend sind das erste Verbindungselement A6a der Verbindungsvorrichtung und das zweite Verbindungselement A6b der Verbindungsvorrichtung jeweils als Teleskopschiene ausgebildet. Damit die manuell eingestellte Position der jeweiligen Teleskopschiene gehalten wird, umfasst jede der Teleskopschienen ein Schwerläufigkeitsmittel, durch welches die Teleskopschiene automatisch bis zu einer definierbaren einwirkenden Kraft in einer manuell eingestellten Position verbleibt. Alternativ und/oder zusätzlich dazu kann jedoch auch vorgesehen sein, dass jede der Teleskopschienen ein Feststellmittel zur zusätzlichen Fixierung dieser Position aufweist, beispielsweise eine Schraube, so dass auch starke Erschütterungen des Computergeräts keine Veränderung der eingestellten Position bewirken.

Fig. 5 zeigt in einer Draufsicht eine Ausgestaltungsvariante für eine erfindungsgemäße virtuelle Tastatur A11. Vorliegend weist die Tastatur ein deutsches Tastaturlayout, welches für die erste berührungsempfindliche Fläche A9a vorgesehen ist. Die virtuelle Tastatur A11 kann als Rücklicht-Tastatur oder als E-Ink-Tastatur ausgebildet sein.

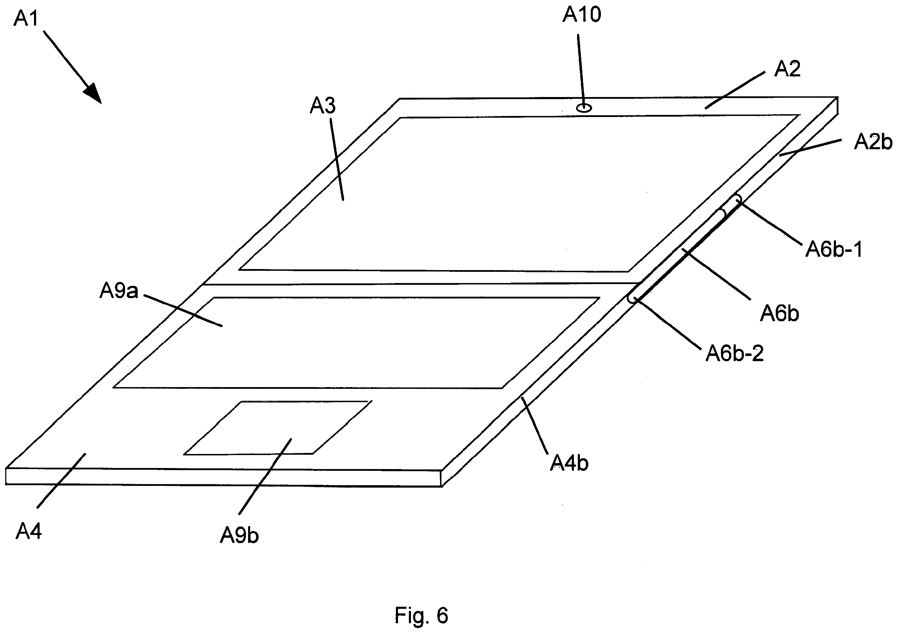

Fig. 6 zeigt in einer perspektivischen Ansicht ein erfindungsgemäßes Computergerät im Poster-Modus, bei welche die obere Geräteeinheit A2 und die untere Geräteeinheit A4 nebeneinander angeordnet sind, wobei der zwischen der oberen Geräteeinheit A2 und der unteren Geräteeinheit A4 gegebene Winkel 180 Grad beträgt. Das Verbindungselement A6b erstreckt sich entlang der Seite A2b der oberen Geräteeinheit A2 und der Seite A4b der unteren Geräteeinheit A4. Dieser Modus ist insbesondere dann vorteilhaft, wenn die wobei die beispielsweise als E-Ink-Tastatur ausgebildete Eingabevorrichtung A5 zusätzlich zur Ausgabe von Informationen vorgesehen ist, da auf diese Weise eine Wiedergabe von Informationen über die gesamte Fläche von oberer Geräteeinheit A2 und unterer Geräteeinheit A4 erfolgen kann, insbesondere wenn die Eingabevorrichtung A5 einteilig (entsprechend Fig. 4) ausgebildet ist.

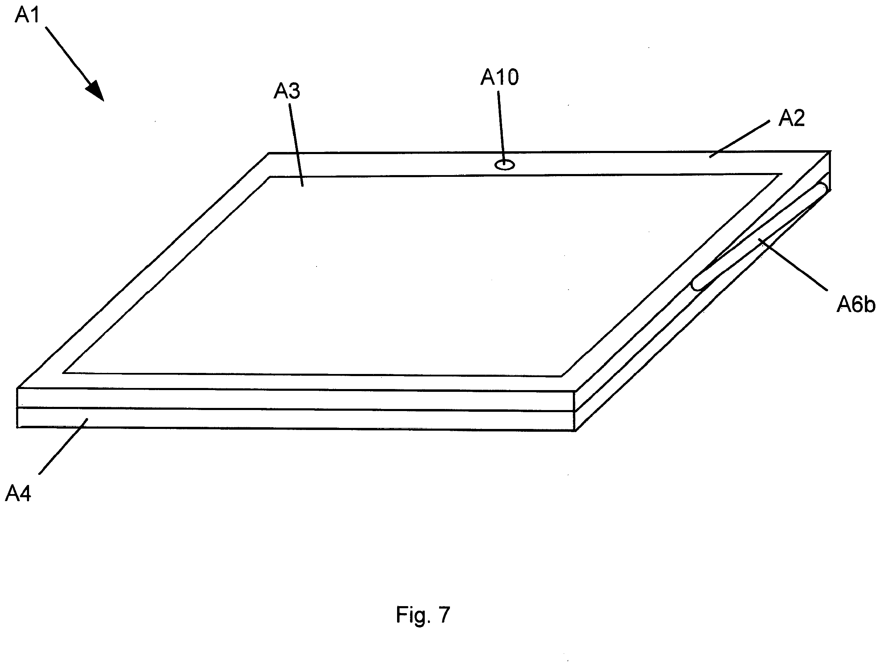

Fig. 7 zeigt in einer perspektivischen Ansicht ein erfindungsgemäßes Computergerät im Tablet-Modus, bei welchem die obere Geräteeinheit A2 um 180 Grad geschwenkt und auf der unteren Geräteeinheit A4 angeordnet ist. Mittels auf der unteren Geräteeinheit A4 entlang der ersten Seite A4a sowie entlang der zweiten Seite A4b angeordneten Anziehungsvorrichtungen A8a, A8b und dazu korrespondierend auf der Oberseite der oberen Geräteeinheit A2 angeordneten ebenfalls entlang der ersten Seite A2a der oberen Geräteeinheit A2 und entlang der zweiten Seite A2b der oberen Geräteeinheit A2 angeordneten Anziehungsvorrichtungen werden die obere Geräteeinheit A2 und die untere Geräteeinheit A4 fest zusammengehalten. Die Eingabevorrichtung A5 der unteren Geräteeinheit A4 ist vorzugsweise inaktiv geschaltet, so dass diese im Tablet-Modus nicht stört wie es beispielsweise bei aus dem Stand der Technik bekannten Lösungen mit einem fest zwischen oberer und unterer Geräteeinheit angeordneten 360 Grad-Scharnier der Fall ist.

Fig. 8a zeigt in einer perspektivischen Ansicht ein Zylinderscharnier A12 gemäß einer ersten Ausgestaltungsform. Dabei ist entsprechend der vereinfachten Darstellung der innere Zylinder A12b teilweise aus dem äußeren Zylinder A12a herausgezogen, um den gegebenen Mechanismus zu verdeutlichen. Erfindungsgemäß sind die Gelenke in Form von Zylinderscharnieren A12 und damit die als Verbindungsvorrichtung agierenden Teleskopschienen vorteilhafterweise am hinteren Ende der Seiten A4a, A4b der unteren Geräteeinheit A4 und an mittlerer Position der Seiten A2a, A2b der oberen Geräteeinheit A2 angebracht.

Fig. 8b zeigt in einer Draufsicht das Zylinderscharnier gemäß Fig. 8a, wobei die Wellenform stark betont dargestellt ist, um den Mechanismus klarzustellen. Entsprechend kann eine Arretierung des Winkels durch Verdrehung in 14 verschiedenen Positionen erfolgen, so dass eine Abstufung in Winkeln von etwa 25 Grad möglich ist. Alternativ kann auch eine feinere oder eine gröbere Abstufung gewählt werden.

Fig. 9 zeigt in einer perspektivischen Ansicht ein Zylinderscharnier gemäß einer zweiten Ausgestaltungsform. Entsprechend dieser alternativen Lösung wird eine stufenlose, reibungslose Justierung ermöglicht. Die konstruktive Lösung umfasst zwei in einem äußeren Zylinder A12a angeordnete magnetische Stifte A13a, A13b, von denen ein erster Stift A13a mit einer Seite A4a, A4b der unteren Geräteeinheit A4 bzw. mit einer Seite A2a, A2b der oberen Geräteeinheit A2 verbunden ist und ein zweiter Stift A13b mit der Verbindungsvorrichtung verbunden ist. Alternativ dazu kann auch vorgesehen sein, dass der äußere Zylinder A12a an einer Seite A4a, A4b der unteren Geräteeinheit A4 oder an einer Seite A2a, A2b der oberen Geräteeinheit A2 befestigt ist und ferner lediglich ein im äußeren Zylinder A12a angeordneter Stift vorgesehen ist, welcher entsprechend mit der Verbindungsvorrichtung verbunden ist.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

Bezugszeichenliste:

| | |
|---|---|
| A1 | Computergerät |
| A2 | obere Geräteeinheit |
| A2a, A2b | Seiten der oberen Geräteeinheit |
| A3 | Anzeigevorrichtung |
| A4 | untere Geräteeinheit |
| A4a, A4b | Seiten der unteren Geräteeinheit |
| A5 | Eingabevorrichtung |
| A6a, A6b | Verbindungselement |
| A6a-1, A6b-1 | erstes Ende |
| A6a-2, A6b-2 | zweites Ende |
| A7a, A7b | erste Anziehungsvorrichtung |
| A8a, A8b | zweite Anziehungsvorrichtung |
| A9a, A9b | berührungsempfindliche Fläche |
| A10 | Kamera |

| A11 | virtuelle Tastatur |
|---|---|
| A12 | Zylinderscharnier |
| A12a | äußerer Zylinder |
| A12b | innerer Zylinder |
| A13a | innerer Stift |
| A13b | äußerer Stift |

**Patentansprüche**

1. Tragbares Computergerät (A1), aufweisend

   - eine obere Geräteeinheit (A2) mit einer Anzeigevorrichtung (A3),
   - eine untere Geräteeinheit (A4) mit einer Eingabevorrichtung (A5), und
   - eine Verbindungsvorrichtung zur Verbindung der oberen Geräteeinheit (A2) mit der unteren Geräteeinheit (A4), umfassend

   - ein erstes Verbindungselement (A6a), welches mit einem ersten Ende (A6a-1) an einer ersten Seite (A2a) der oberen Geräteeinheit (A2) und mit einem zweiten Ende (A6a-2) an einer ersten Seite (A4a) der unteren Geräteeinheit (A4) verschwenkbar befestigt ist, wobei jeweils eine Verschwenkbarkeit von bis zu 360 Grad gegeben ist, und
   - ein zweites Verbindungselement (A6b), welches mit einem ersten Ende (A6b-1) an einer zweiten Seite (A2b) der oberen Geräteeinheit (A2) und mit einem zweiten Ende (A6b-2) an einer zweiten Seite (A4b) der unteren Geräteeinheit (A4) verschwenkbar befestigt ist, wobei jeweils eine Verschwenkbarkeit von bis zu 360 Grad gegeben ist,

   wobei das erste Verbindungselement (A6a) und das zweite Verbindungselement (A6b) jeweils derart teleskopartig verstellbar sind, dass die Länge der Verbindungsvorrichtung einstellbar ist.

2. Computergerät (A1) nach Anspruch 1, wobei das erste Verbindungselement (A6a) der Verbindungsvorrichtung und das zweite Verbindungselement (A6b) der Verbindungsvorrichtung jeweils als Teleskopschiene ausgebildet sind.

3. Computergerät (A1) nach Anspruch 2, wobei die Teleskopschiene ein Feststellmittel zur Fixierung einer manuell eingestellten Position aufweist.

4. Computergerät (A1) nach Anspruch 2 oder Anspruch 3, wobei die Teleskopschiene ein Schwerläufigkeitsmittel umfasst, durch welches die Teleskopschiene automatisch bis zu einer definierbaren einwirkenden Kraft in einer manuell eingestellten Position verbleibt.

5. Computergerät (A1) nach Anspruch 4, wobei das Schwerläufigkeitsmittel ein Gummiprofil und/oder eine hydraulische Einrichtung umfasst.

6. Computergerät (A1) nach einem der Ansprüche 1 bis 5, wobei die obere Geräteeinheit (A2) eine zumindest abschnittsweise entlang der ersten Seite (A2a) der oberen Geräteeinheit (A2) und entlang der zweiten Seite (A2b) der oberen Geräteeinheit (A2) angeordnete bzw. ausgebildete erste Anziehungsvorrichtung (A7a, 7b) aufweist, die untere Geräteeinheit (A4) eine zumindest abschnittsweise entlang der ersten Seite (A4a) der unteren Geräteeinheit (A4) und entlang der zweiten Seite (A4b) der unteren Geräteeinheit (A4) angeordnete bzw. ausgebildete zweite Anziehungsvorrichtung (A8a, A8b) aufweist, und die erste Anziehungsvorrichtung (A7a, A7b) mit der zweiten Anziehungsvorrichtung (A8a, A8b) zusammenwirkt.

7. Computergerät (A1) nach Anspruch 6, wobei ein Zusammenwirken der ersten Anziehungsvorrichtung (A7a, A7b) mit der zweiten Anziehungsvorrichtung (A8a, A8b) mittels magnetischer Kraft vorgesehen ist.

8. Computergerät (A1) nach einem der Ansprüche 1 bis 7, wobei zur Verbindung des jeweiligen Endes (A6a-1, A6a-2, A6b-1, A6b-2) des jeweiligen Verbindungselements (A6a, A6b) mit der oberen Geräteeinheit (A2) bzw. mit der unteren Geräteeinheit (A4) ein Zylinderscharnier (A12) vorgesehen ist.

9.  Computergerät (A1) nach einem der Ansprüche 1 bis 8, wobei die Anzeigevorrichtung (A3) berührungsempfindlich ausgebildet ist und zusätzlich zur Eingabe von Informationen vorgesehen ist.

10. Computergerät (A1) nach einem der Ansprüche 1 bis 9, wobei die Eingabevorrichtung (A5) der unteren Geräteeinheit (A4) zumindest eine berührungsempfindliche Fläche (A9a, A9b) umfasst.

11. Computergerät (A1) nach Anspruch 10, wobei die zumindest eine berührungsempfindliche Fläche (A9a) der Eingabevorrichtung (A5) der unteren Geräteeinheit (A4) einen Sensor zur Gestensteuerung des Computergerätes (A1) umfasst.

12. Computergerät (A1) nach Anspruch 10 oder Anspruch 11, wobei die zumindest eine berührungsempfindliche Fläche (A9b) der Eingabevorrichtung (A5) der unteren Geräteeinheit (A4) eine virtuelle Tastatur umfasst, wobei die virtuelle Tastatur vorzugsweise eine Rücklicht-Tastatur oder eine E-Ink-Tastatur ist.

13. Computergerät (A1) nach Anspruch 12, wobei die als E-Ink-Tastatur ausgebildete Eingabevorrichtung (A5) zusätzlich zur Ausgabe von Informationen vorgesehen ist.

14. Computergerät (A1) nach einem der Ansprüche 1 bis 13, **dadurch gekennzeichnet, dass** dieses ein Datenverarbeitungssystem zur ergonomischen Interaktion eines Anwenders mit Daten bereitstellt, vorzugsweise eine Mensch-Maschine-Schnittstelle zur Bereitstellung von Informationen und/oder Steuerelementen im Hinblick auf eine Interaktion eines Anwenders mit Daten.

## Claims

1.  A portable computing device (A1) comprising

    - an upper device unit (A2) having a display device (A3),
    - a lower device unit (A4) having an input device (A5), and
    - a connecting device for connecting the upper device unit (A2) to the lower device unit (A4), comprising

      - a first connecting element (A6a), which is pivotally attached with a first end (A6a-1) to a first side (A2a) of the upper device unit (A2) and with a second end (A6a-2) to a first side (A4a) of the lower device unit (A4), in each case a pivotability of up to 360 degrees being given, and
      - a second connecting element (A6b), which is pivotally attached with a first end (A6b-1) to a second side (A2b) of the upper device unit (A2) and with a second end (A6b-2) to a second side (A4b) of the lower device unit (A4), in each case a pivotability of up to 360 degrees being given,

    wherein the first connecting element (A6a) and the second connecting element (A6b) are each telescopically adjustable such that the length of the connecting device is adjustable.

2.  The computing device (A1) according to claim 1, wherein the first connecting element (A6a) of the connecting device and the second connecting element (A6b) of the connecting device are each formed as a telescopic rail.

3.  The computing device (A1) according to claim 2, wherein said telescopic rail comprises a fixing means for fixing a manually set position.

4.  The computing device (A1) according to claim 2 or claim 3, wherein the telescopic rail comprises a heavy running means by which the telescopic rail automatically remains in a manually set position up to a definable acting force.

5.  The computing device (A1) according to claim 4, wherein the heavy running means comprises a rubber profile and/or a hydraulic device.

6.  The computing device (A1) according to any one of claims 1 to 5, wherein the upper device unit (A2) comprises a first attraction device (A7a, A7b) arranged or formed at least in sections along the first side (A2a) of the upper device unit (A2) and along the second side (A2b) of the upper device unit (A2), the lower device unit (A4) has a second attraction device (A8a, A8b) arranged or formed at least in sections along the first side (A4a) of the lower device unit (A4) and along the second side (A4b) of the lower device unit (A4), and the first attraction device (A7a, A7b) cooperates with the second attraction device (A8a, A8b).

7. The computing device (A1) according to claim 6, wherein cooperating the first attracting device (A7a, A7b) with the second attracting device (A8a, A8b) is provided by means of magnetic force.

8. The computing device (A1) according to any one of claims 1 to 7, wherein a cylinder hinge (A12) is provided for connecting the respective end (A6a-1, A6a-2, A6b-1, A6b-2) of the respective connecting element (A6a, A6b) to the upper device unit (A2) and to the lower device unit (A4), respectively.

9. The computing device (A1) according to any one of claims 1 to 8, wherein the display device (A3) is designed to be touch-sensitive and is additionally provided for inputting information.

10. The computing device (A1) according to any one of claims 1 to 9, wherein the input device (A5) of the lower device unit (A4) comprises at least one touch-sensitive surface (A9a, A9b).

11. The computing device (A1) according to claim 10, wherein the at least one touch-sensitive surface (A9a) of the input device (A5) of the lower device unit (A4) comprises a sensor for gesture control of the computing device (A1).

12. The computing device (A1) according to claim 10 or claim 11, wherein the at least one touch-sensitive surface (A9b) of the input device (A5) of the lower device unit (A4) comprises a virtual keyboard, wherein the virtual keyboard is preferably a backlight keyboard or an e-ink keyboard.

13. The computing device (A1) according to claim 12, wherein the input device (A5) configured as an e-ink keyboard is additionally provided for outputting information.

14. The computing device (A1) according to any one of claims 1 to 13, **characterized in that** this provides a data processing system for ergonomic interaction of a user with data, preferably a man-machine interface for providing information and/or control elements with regard to an interaction of a user with data.

**Revendications**

1. Appareil informatique portable (A1), comprenant

   - une unité d'appareil supérieure (A2) avec un dispositif d'affichage (A3),
   - une unité d'appareil inférieure (A4) avec un dispositif d'entrée (A5), et
   - un dispositif de connexion pour connecter l'unité de dispositif supérieure (A2) à l'unité de dispositif inférieure (A4), comprenant

      - un premier élément de liaison (A6a), qui est fixé de manière pivotante par une première extrémité (A6a-1) sur un premier côté (A2a) de l'unité d'appareil supérieure (A2) et par une deuxième extrémité (A6a-2) sur un premier côté (A4a) de l'unité d'appareil inférieure (A4), une capacité de pivotement allant jusqu'à 360 degrés étant respectivement donnée, et
      - un deuxième élément de liaison (A6b) qui est fixé de manière pivotante par une première extrémité (A6b-1) à un deuxième côté (A2b) de l'unité d'appareil supérieure (A2) et par une deuxième extrémité (A6b-2) à un deuxième côté (A4b) de l'unité d'appareil inférieure (A4), une capacité de pivotement allant jusqu'à 360 degrés étant respectivement donnée,

   le premier élément de liaison (A6a) et le deuxième élément de liaison (A6b) étant respectivement réglables de manière télescopique de telle sorte que la longueur du dispositif de liaison est réglable.

2. Appareil informatique (A1) selon la revendication 1, dans lequel le premier élément de liaison (A6a) du dispositif de liaison et le deuxième élément de liaison (A6b) du dispositif de liaison sont chacun réalisés sous forme de rail télescopique.

3. Appareil informatique (A1) selon la revendication 2, dans lequel la glissière télescopique comporte un moyen de blocage pour fixer une position réglée manuellement.

4. Appareil informatique (A1) selon la revendication 2 ou la revendication 3, dans lequel la glissière télescopique comprend un moyen de gravité grâce auquel la glissière télescopique reste automatiquement dans une position réglée manuellement jusqu'à une force agissante définissable.

5. Appareil informatique (A1) selon la revendication 4, dans lequel le moyen de déplacement lourd comprend un profilé en caoutchouc et/ou un dispositif hydraulique.

6. Appareil informatique (A1) selon l'une quelconque des revendications 1 à 5, dans lequel l'unité d'appareil supérieure (A2) comprend un dispositif d'attache (A2) disposé au moins en partie le long du premier côté (A2a) de l'unité d'appareil supérieure (A2) et le long du deuxième côté (A2b) de l'unité d'appareil supérieure (A2). premier dispositif d'attraction (A7a, 7b), l'unité de dispositif inférieure (A4) comprend un deuxième dispositif d'attraction (A8a, A8b) disposé ou formé au moins en partie le long du premier côté (A4a) de l'unité de dispositif inférieure (A4) et le long du deuxième côté (A4b) de l'unité de dispositif inférieure (A4), et le premier dispositif d'attraction (A7a, A7b) coopère avec le deuxième dispositif d'attraction (A8a, A8b).

7. Appareil informatique (A1) selon la revendication 6, dans lequel une coopération du premier dispositif d'attraction (A7a, A7b) avec le deuxième dispositif d'attraction (A8a, A8b) est prévue au moyen d'une force magnétique.

8. Appareil informatique (A1) selon l'une des revendications 1 à 7, dans lequel une charnière cylindrique (A12) est prévue pour relier l'extrémité respective (A6a-1, A6a-2, A6b-1, A6b-2) de l'élément de liaison respectif (A6a, A6b) à l'unité d'appareil supérieure (A2) ou à l'unité d'appareil inférieure (A4).

9. Appareil informatique (A1) selon l'une des revendications 1 à 8, dans lequel le dispositif d'affichage (A3) est sensible au toucher et est prévu en outre pour la saisie d'informations.

10. Appareil informatique (A1) selon l'une des revendications 1 à 9, dans lequel le dispositif de saisie (A5) de l'unité inférieure de l'appareil (A4) comprend au moins une surface tactile (A9a, A9b).

11. Appareil informatique (A1) selon la revendication 10, dans lequel l'au moins une surface tactile (A9a) du dispositif d'entrée (A5) de l'unité d'appareil inférieure (A4) comprend un capteur pour la commande gestuelle de l'appareil informatique (A1).

12. Périphérique informatique (A1) selon la revendication 10 ou la revendication 11, dans lequel ladite au moins une surface tactile (A9b) du dispositif d'entrée (A5) de l'unité de périphérique inférieure (A4) comprend un clavier virtuel, ledit clavier virtuel étant de préférence un clavier rétroéclairé ou un clavier E-Ink.

13. Appareil informatique (A1) selon la revendication 12, dans lequel le dispositif d'entrée (A5) conçu comme un clavier E-Ink est en outre prévu pour l'édition d'informations.

14. Appareil informatique (A1) selon l'une des revendications 1 à 13, **caractérisé en ce qu'**il fournit un système de traitement de données pour l'interaction ergonomique d'un utilisateur avec des données, de préférence une interface homme-machine pour fournir des informations et/ou des éléments de commande en vue d'une interaction d'un utilisateur avec des données.

Fig. 1

Fig. 2

Fig. 3

Fig. 4

A11

→ q w e r t z u i o p ü +

a s d f g h j k l ö ä #

< y x c v b n m , . -

Fig. 5

EP 3 969 981 B1

Fig. 6

Fig. 7

A12

A12b

Fig. 8b

A12a

A12

A12b

Fig. 8a

A12a

Fig. 9

EP 3 969 981 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6665175 B1
- US 6504707 B2
- US 20060256512 A1
- US 20040228077 A1
- US 6262885 B1
- US 6532147 B1
- US 20060039104 A1
- US 20070183123 A1